(19) Europäisches Patentamt
European Patent Office
Office européen des brevets

(11) **EP 2 869 477 A1**

(12) **EUROPEAN PATENT APPLICATION**

(43) Date of publication:
**06.05.2015 Bulletin 2015/19**

(51) Int Cl.:
*H04B 7/06* (2006.01)   *H04B 7/04* (2006.01)
*H04L 5/00* (2006.01)

(21) Application number: **13306509.4**

(22) Date of filing: **04.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Halbauer, Hardy**
**70435 Stuttgart (DE)**

• **Boccardi, Federico**
**20059 Vimercate (IT)**

(74) Representative: **Hofmann, Dirk et al**
**Alcatel-Lucent Deutschland AG**
**Intellectual Property Business Group**
**Lorenzstrasse 10**
**70435 Stuttgart (DE)**

Remarks:
Amended claims in accordance with Rule 137(2) EPC.

(54) **Transmitter method for supporting a determination of a set of beamforming weights by a receiver method, receiver method, transmitter apparatus, receiver apparatus and network node thereof**

(57) The embodiments of the invention relate to a transmitter method for supporting a determination of a set of beamforming weights by a receiver method. The transmitter method contains the steps of allocating a predefined reference signal (REF-SIG-1a, REF-SIG-2a) to at least one group of radio resource units (RRU-G1a, RRU-G2a) of a transmission channel between a first antenna array and a second antenna array, and transmitting said predefined reference signal (REF-SIG-1a, REF-SIG-2a) via the transmission channel from the first antenna array to the second antenna array. The embodiments of the invention further relate to a receiver method for a determination of a set of beamforming weights. The receiver method contains the steps of receiving at a first antenna element of a second antenna array and at least one further antenna element of the second antenna array via a transmission channel from a first antenna array a predefined reference signal (REF-SIG-1a, REF-SIG-2a) allocated to at least one group of radio resource units (RRU-G1a, RRU-G2a) of the transmission channel, determining based on the received predefined reference signal (REF-SIG-1a, REF-SIG-2a) a first channel estimation of the transmission channel for the first antenna element and at least one further channel estimation of the transmission channel for the at least one further antenna element, and determining the set of beamforming weights for a transmission from the second antenna array and/or a reception at the second antenna array based on the first channel estimation and the at least one further channel estimation. The embodiments of the invention even further relate to a transmitter apparatus, a receiver apparatus and a network node, which contains a transmitter apparatus and a receiver apparatus.

FIG. 2

## Description

### FIELD OF THE INVENTION

The present invention relates to radio transmission via multiple antenna elements and, more particularly but not exclusively, to a determination of a set of beamforming weights for transmitting and/or receiving millimeter waves by a large number of antenna elements of an antenna array.

### BACKGROUND

This section introduces aspects that may be helpful in facilitating a better understanding of the invention. Accordingly, the statements of this section are to be read in this light and are not to be understood as admission about what is in the prior art.

For estimation of beamforming weights of an antenna array usually channel estimation is performed for each antenna element individually. Based on channel estimates the beamforming weights are then calculated using an appropriate algorithm, e.g. the well-known MRC algorithm (MRC = Maximum Ratio Combining) to maximize receive power.

When using mm-waves (mm = millimeter) either for e.g. small cell backhaul or access applications, pathloss is much higher than at usual operating frequencies of cellular mobile communication systems, e.g. at 2.6 GHz. Therefore, to compensate for the higher path loss in the mm wavelength range with reasonable effort and to operate a mm-wave link successfully, high gain antennas with a gain in a range of 30 to 45 dB or even above this range are needed at a transmitter side and at a receiver side. High gain antennas means that the antennas for mm-wave links will be realized as arrays with a large number of antenna elements (e.g. above 50 or even above 100) and thereby a narrow beam width can be obtained. However, setting up a beam pattern with correct weights is not possible in a same way as at a frequency of 2.6 GHz. Due to an extremely low gain of an individual antenna element and the higher path loss at mm-wave frequencies signals provided by each individual antenna element are too small to guarantee a sufficiently accurate channel estimation based on known reference signals or pilots and related weight derivation.

A straightforward solution to set up such links would be to scan all spatial directions around a transmitter location and a receiver location. In a practical system with antenna arrays such a scan can be performed with multiple pre-calculated beams covering all possible spatial directions, which are applied sequentially until a suitable combination of transmit and receive beam pattern is found. A disadvantage of this method is a relatively long trial and error phase, because for each direction at the transmitter all possible receiver directions need to be scanned. So this method is suitable for channel investigations, but is highly disadvantageous for operation of a flexible and dynamic communication system.

### SUMMARY

Thus, an object of the embodiments of the invention is to provide a flexible and dynamic method for obtaining high gain antenna pattern at a transmitter antenna array and at a receiver antenna array, especially for mm-wave applications.

The object is achieved by a transmitter method for supporting a determination of a set of beamforming weights by a receiver method. The transmitter method contains the step of allocating a predefined reference signal to at least one group of radio resource units of a transmission channel between a first antenna array and a second antenna array. The transmitter method further contains the step of transmitting the predefined reference signal via the transmission channel from the first antenna array to the second antenna array. Preferably, the predefined reference signal may be transmitted via a single antenna element of the first antenna array. Alternatively, the predefined reference signal may be transmitted by a quasi-omnidirectional beam pattern, for which the beamforming weights to be applied at the first antenna array may be a priori known if the first antenna array is already calibrated.

The object is further achieved by a receiver method for determining a set of beamforming weights. The receiver method contains the step of receiving at a first antenna element of a second antenna array and at least one further antenna element of the second antenna array via a transmission channel from a first antenna array a predefined reference signal, which is allocated to at least one group of radio resource units of the transmission channel. The receiver method further contains the step of determining based on the received predefined reference signal a first channel estimation of the transmission channel for the first antenna element and at least one further channel estimation of the transmission channel for the at least one further antenna element. The receiver method even further contains the step of determining the set of beamforming weights for a transmission from the second antenna array and/or a reception at the second antenna array based on the first channel estimation and the at least one further channel estimation.

The object is even further achieved by a transmitter apparatus for supporting a determination of a set of beamforming weights by a receiver apparatus. The transmitter apparatus contains means for allocating a predefined reference signal to at least one group of radio resource units of a transmission channel between a first antenna array and a second antenna array. The transmitter apparatus further contains means for transmitting the predefined reference signal via the transmission channel from the first antenna array to the second antenna array.

In embodiments, the means for allocating the predefined reference signal may correspond to any allocation unit, allocating module, scheduler unit, scheduler module etc. Hence, in embodiments the means for allocating the predefined reference signal may contain an input for information about a number of radio resource units, which are required for the transmission of the predefined reference signal, an algorithm, which select at least one group of radio resource units and which allocates the predefined reference signal to the at least one group of radio resource units, and an output for information about the allocated at least one group of radio resource units. In some embodiments the means for allocating the predefined reference signal can be implemented in terms of a computer program and a hardware component on which the computer program is executed, such as a DSP (DSP = Digital Signal Processor), an ASIC (ASIC = Application-Specific Integrated Circuit), an FPGA (FPGA = Field-Programmable Gate Array) or any other processor.

In embodiments, the means for transmitting the predefined reference signal may correspond to any transmitter unit, transmitter module etc. such as an analogue part with a power amplifier of a radio transmitter or a radio transceiver. Hence, in embodiments the means for transmitting the predefined reference signal may contain an input for the predefined reference signal, components, which convert the predefined reference signal into an analogue signal and which amplify the predefined reference signal, and an output for the amplified predefined reference signal. In some embodiments the means for transmitting the predefined reference signal can be partly implemented in terms of a computer program and a hardware component on which the computer program is executed, such as a DSP, an ASIC, an FPGA or any other processor.

The object is even further achieved by a receiver apparatus for determining a set of beamforming weights. The receiver apparatus contains means for receiving at a first antenna element of a second antenna array and at least one further antenna element of the second antenna array via a transmission channel from a first antenna array a predefined reference signal, which is allocated to at least one group of radio resource units of the transmission channel. The receiver apparatus further contains means for determining based on the received predefined reference signal a first channel estimation of the transmission channel for the first antenna element and at least one further channel estimation of the transmission channel for the at least one further antenna element. The receiver apparatus even further contains means for determining the set of beamforming weights for a transmission from the second antenna array and/or a reception at the second antenna array based on the first channel estimation and the at least one further channel estimation.

In embodiments, the means for receiving the predefined reference signal may correspond to any receiver unit, receiver module etc. such as an analogue part with a pre-amplifier of a radio receiver or a radio transceiver. Hence, in embodiments the means for receiving the predefined reference signal may contain an input for received radio frequency signals, which contain the predefined reference signal, components, which pre-amplify the received radio frequency signals and which convert the pre-amplified received radio frequency signals into a digital signal, and an output for the pre-amplified digitized radio frequency signals. In some embodiments the means for receiving the predefined reference signal can be partly implemented in terms of a computer program and a hardware component on which the computer program is executed, such as a DSP, an ASIC, an FPGA or any other processor.

In embodiments, the means for determining the first channel estimation and the at least one further channel estimation may correspond to any estimation unit, estimation module, channel estimator etc. Hence, in embodiments the means for determining the first channel estimation and the at least one further channel estimation may contain an input for the received predefined reference signal, an algorithm, which determines transmission channel parameters such as impulse response of the transmission channel with respect to the first antenna element and the at least one further antenna element, and an output for the transmission channel parameters. In some embodiments the means for determining the first channel estimation and the at least one second channel estimation can be implemented in terms of a computer program and a hardware component on which the computer program is executed, such as a DSP, an ASIC, an FPGA or any other processor.

In embodiments, the means for determining the set of beamforming weights may correspond to any determination unit, determination module, etc. Hence, in embodiments the means for determining the set of beamforming weights may contain an input for the transmission channel parameters, an algorithm, which determines the set of beamforming weights based on the transmission channel parameters, and an output for the set of beamforming weights. In some embodiments the means for determining the set of beamforming weights can be implemented in terms of a computer program and a hardware component on which the computer program is executed, such as a DSP, an ASIC, an FPGA or any other processor.

The object is even further achieved by a network node, which contains the transmitter apparatus and/or the receiver apparatus. The network node may be for example a base station, a macro base station, a micro base station or a mobile station.

The embodiments provide a solution especially for mm-wavelength links to find initial beamforming weights and to track these beamforming weights dynamically and to realize an antenna pattern with a high gain, which is significantly higher than a gain of each individual antenna element. Based on the antenna pattern well-known tracking and optimization algorithms for beamforming may be applied, which rely on radio frequency signals with sufficiently high SNR (SNR = Signal to Noise Ratio) as provided by the high gain antenna pattern generated according to the embodiments of the invention. The embodiments provide an advantage of offering a fast, reliable and flexible mechanism for radio link adjustment and radio link adaptation especially in case of extremely high path loss. The embodiments provide a further advantage of not requiring a trial and error phase.

Further advantageous features of the embodiments of the invention are defined in the dependent claims and are described in the following detailed description.

## BRIEF DESCRIPTION OF THE FIGURES

The embodiments of the invention will become apparent in the following detailed description and will be illustrated by accompanying figures given by way of non-limiting illustrations.

Figure 1 shows schematically a block diagram of a radio communication system according to a first application scenario.

Figure 2 shows schematically a block diagram of a further radio communication system according to a second application scenario.

Figure 3 shows schematically a flow diagram of a transmitter method for supporting a determination of a set of beamforming weights by a receiver method according to an exemplary embodiment.

Figure 4 shows schematically an allocation of two predefined reference signals to radio resource units of a transmission channel according to a first embodiment.

Figure 5 shows schematically an allocation of two further predefined reference signals to further radio resource units of a transmission channel according to a second embodiment.

Figure 6 shows schematically a flow diagram of a receiver method for determining a set of beamforming weights according to an exemplary embodiment.

Figure 7 shows schematically a block diagram for channel estimation according to an exemplary embodiment.

Figure 8 shows schematically a block diagram of a transmitter apparatus for supporting a determination of a set of beamforming weights by a receiver apparatus according to an exemplary embodiment.

Figure 9 shows schematically a block diagram of a receiver apparatus for determining of a set of beamforming weights according to an exemplarily embodiment.

Figure 10 shows schematically a block diagram of a network node according to an exemplarily embodiment.

## DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

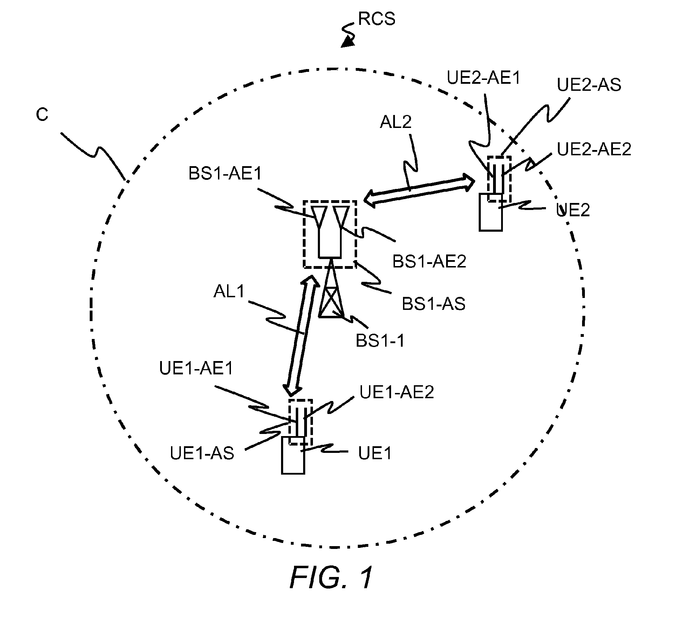

Figure 1 shows schematically a radio communication system RCS with a first application scenario for the embodiments of the invention. For simplification only a single base station BS1-1 and two mobile stations UE1, UE2 of the radio communication system RCS are shown.

The term "base station" may be considered synonymous to and/or referred to as a base transceiver station, access point base station, access point, macro cell, microcell, small cell, femto cell, pico cell etc. and may describe equipment that provides wireless connectivity via one or more radio links to one or more mobile stations. The base station BS1-1 may be for example an LTE Node B, an IEEE 802.11 access point, a WiMAX base station etc.

The term "mobile station" may be considered synonymous to, and may hereafter be occasionally referred to, as a mobile unit, a mobile user, an access terminal, a user equipment, a subscriber, a user, a remote station, a mobile small cell, a mobile pico cell, a mobile femto cell etc. Each of the mobile stations UE1, UE2 may be for example a cellular telephone, a smart phone, a portable computer, a pocket computer, a hand-held computer, a smart watch, a smart glass (e.g. a Google glass), a personal digital assistant, a moving base station or a vehicle-mounted mobile device such as a repeater or relay in a bus, a train or a car.

The radio communication system RCS may apply radio access technologies such as LTE or LTE Advance (LTE = Long Term Evolution), WiMAX (WiMAX = Worldwide Interoperability for Microwave Access), WLAN (WLAN = Wireless Local Area Network) etc.

The base station BS1-1 may contain an antenna array BS1-AS with two or more antenna elements BS1-AE1, BS1-AE2. Especially for a transmission of mm-waves, the antenna array BS1-AS may contain for example 8 x 8 antenna elements (arranged in 8 rows and 8 columns) or even up to 100 x 100 antenna elements for extremely high gain and narrow so-called HPWB beams (HPWB = Half Power Beamwidth). The antenna array BS1-AS may provide wireless access for a radio cell C.

The term "radio cell" may be considered synonymous to and/or referred to as radio cell, cell, radio sector, sector etc.

A first mobile station UE1 and a second mobile station UE2 may be located within the radio cell C and may be served by the base station BS1-1. The first mobile station UE1 may contain an antenna array UE1-AS with two or more antenna elements UE1-AE1, UE1-AE2. In a same way, the second mobile station UE2 may contain an antenna array UE2-AS with two or more antenna elements UE2-AE1, UE2-EA2. Especially for a transmission of mm-waves, the antenna arrays UE1-AS, UE2-AS may contain for example 64 (in an 8 x 8 arrangement), 256 (in a 16 x 16 arrangement) or even more antenna elements. In downlink direction from the base station BS1-1 to the mobile stations UE1, UE2, one or several predefined downlink reference signals, which are each distributed each across at least one group of radio resource units of a first access link AL1 between the first mobile station UE1 and the base station BS1-1 and a second access link AL2 between the second mobile station UE2 and the base station BS1-1 may be transmitted via the first access link AL1 and the second access link AL2 to the mobile stations UE1, UE2 for enabling a determination and an adaptation of beamforming weights for antenna arrays UE1-AS, UE2-AS of the mobile stations UE1, UE2.

In uplink direction from the mobile stations UE1, UE2 to the base station BS1-1, one or several first predefined uplink reference signals, which are each distributed across at least one first group of radio resource units of the first access link AL1 and one or several second predefined reference signals, which are distributed across at least one second group of radio resource units of the second access link AL2 may be transmitted to the base station BS1-1 for enabling a determination and an adaptation of beamforming weights for the antenna array BS1-AS of the base station BS1-1.

The term "reference signal" may be considered synonymous to and/or referred to as a reference symbol, CSI-reference symbol (CSI = Channel State Information), pilot, pilot signal, pilot symbol, beacon, beacon signal etc.

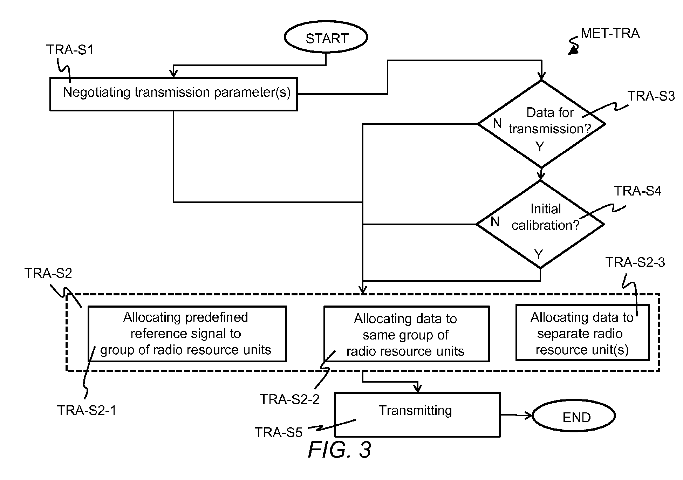

The first access link AL1 and the second access link AL2 may be access links with a considerably high path loss of e.g. 120 dB (at 80 GHz and 300 m distance, free space path loss). Such high path losses exist especially with respect to mm-wave links. More details will be given in the following description with respect to Figures 3 to 9.

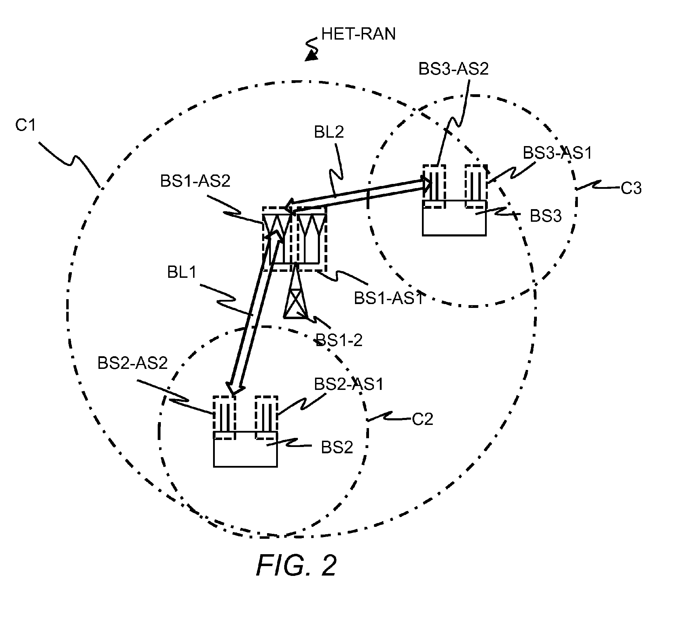

Figure 2 shows schematically a heterogeneous radio access network or HetNet HET-RAN with a second application scenario for the embodiments of the invention. For simplification only a single macro base station BS1-2 and two micro base stations BS2, BS3 of the heterogeneous radio access network HET-RAN and no mobile stations are shown.

The terms "heterogeneous radio access network" or "HetNet" may be considered synonymous to and/or referred to a use of multiple types of access nodes in a wireless network. The wireless network may use a mixture of macro cells and micro cells in order to offer wireless coverage in an environment with a wide variety of wireless coverage zones, ranging from an open outdoor environment to office buildings, homes, and underground areas.

The term "macro base station" may be considered synonymous to and/or referred to a base station, which provides a radio cell having a size in a range of several hundred meters up to several kilometres. A macro base station usually has a maximum output power of typically tens of watts.

The term "micro base station" may be considered synonymous to and/or referred to a base station, which provides a radio cell having a size in a range of several tens of meters up to hundred meters. A micro base station usually has a maximum output power of typically several watts.

The term "macro cell" may be considered synonymous to and/or referred to a radio cell, which provides the widest range of all radio cell sizes. Macro cells are usually found in rural areas or along highways.

The term "micro cell" may be considered synonymous to and/or referred to a radio cell in a cellular network served by a low power cellular base station, covering a limited area (smaller than an area of a macro cell) such as a mall, a hotel, or a transportation hub. A microcell is referred to a group of radio cells, which contain pico cells and femto cells.

The term "pico cell" may be considered synonymous to and/or referred to a small cellular base station typically covering a small area, such as in-building (offices, shopping malls, train stations, stock exchanges, etc.), or more recently in-aircraft. In cellular networks, pico cells are typically used to extend coverage to indoor areas where outdoor signals do not reach well, or to add network capacity in areas with very dense phone usage, such as train stations.

The term "femto cell" may be considered synonymous to and/or referred to a small, low-power cellular base station, typically designed for use in a home or small business. A broader term which is more widespread in the industry is small cell, with femto cell as a subset.

The heterogeneous radio access network HET-RAN may apply radio access technologies such as LTE or LTE Advance, WiMAX, WLAN etc.

The macro base station BS1-2 may contain a first antenna array BS1-AS1 with two or more antenna elements for providing wireless coverage to mobile stations (not shown for simplification), which are located within a macro cell C1. The macro base station BS1-2 may contain a second antenna array BS1-AS2 with two or more antenna elements for enabling a first backhaul link BL1 to a first micro base station BS2 and for enabling a second backhaul link BL2 to a second micro base station BS3. Especially for a transmission of mm-waves, the second antenna array BS1-AS2 may contain 64, 256 or even more antenna elements. Preferably, first radio frequency signals are transmitted via the first backhaul link BL1 in a first frequency range and second radio frequency signals are transmitted in a second frequency range between the first antenna array BS1-AS1 and the mobile stations, which are served by the macro base station BS1-2. The first backhaul link BL1 and the second backhaul link BL2 may be access links with a considerably high path loss of e.g. 120 dB (at 80 GHz and 300 m distance, free space path loss). Such high path losses exist especially with respect to mm-wave links. More details will be given in the following description with respect to Figures 3 to 9.

In a similar way, the first micro base station BS2 may contain a first antenna array BS2-AS1 with two or more antenna elements for providing wireless coverage in the second frequency range to mobile stations (not shown for simplification), which are located within a first micro cell C2. The first micro base station BS2 may contain a second antenna array BS2-AS2 with two or more antenna elements for enabling the first backhaul link BL1 in the first frequency range to the macro base station BS1-2. Especially for a transmission of mm-waves, the second antenna array BS2-AS2 may contain 64, 256 or even more antenna elements. In a same way, the second micro base station BS3 may contain a first antenna array BS3-AS1 with two or more antenna elements for providing wireless coverage in the second frequency range to mobile stations (not shown for simplification), which are located within a second micro cell C3. The second micro base station BS3 may contain a second antenna array BS3-AS2 with two or more antenna elements for enabling the second backhaul link BL2 in the first frequency range to the macro base station BS1-2. Especially for a transmission of mm-waves, the second antenna array BS3-AS2 may contain 64, 256 or even more antenna elements.

According to an alternative embodiment, which is not shown in Figure 2, the macro base station BS1-2, the first micro base station BS2 and the second micro base station BS3 may each contain only a single antenna array, which may be simultaneously applied for one of the backhaul links BL1, BL2 and for direct access links to mobile stations.

In a similar way as described above with respect to the Figure 1, in a direction from the macro base station BS1-2 to the micro base stations BS2, BS3 one or several predefined reference signals, which are each distributed across at least one group of radio resource units of the first backhaul link BL1 and of the second backhaul link BL2 may be transmitted to the micro base stations BS2, BS3 for enabling a determination and an adaptation of beamforming weights for the antenna arrays BS2-AS2, BS3-AS2 of the micro base stations BS2, BS3 for transmissions of radio frequency signals to the macro base station BS1-2 and receptions of radio frequency signals from the macro base station BS1-2.

In a direction from the micro base stations BS2, BS3 to the macro base station BS1-2, one or several first predefined reference signals, which are each distributed across at least one first group of radio resource units of the first backhaul link BL1 and one or several second predefined reference signals, which are each distributed across at least one second group of radio resource units of the second backhaul link BL2 may be transmitted to the macro base station BS1-2 for enabling a determination and an adaptation of beamforming weights for the antenna arrays BS1-AS2 of the macro base station BS1-2 for transmissions of radio frequency signals to the micro base stations BS2, BS3 and receptions of radio frequency signals from the micro base stations BS2, BS3.

Figure 3 shows a flow diagram of a transmitter method MET-TRA for supporting a determination of a set of beamforming weights by a receiver method. The number of the steps for performing the method MET-TRA is not critical, and as can be understood by those skilled in the art that the number of the steps and the sequence of the steps may vary without departing from the scope of the embodiments of the invention as defined in the appended claims.

The method MET-TRA may be executed or performed by one of the network nodes BS1-1, UE1, UE2, BS1-2, BS2, BS3, which are described above with respect to Figure 1 and Figure 2. The method MET-TRA may be started for example when a corresponding network node is switched on or when a fine tuning of beamforming weights for one of the access links AL1, AL2 or the backhaul links BL1, BL2 is required.

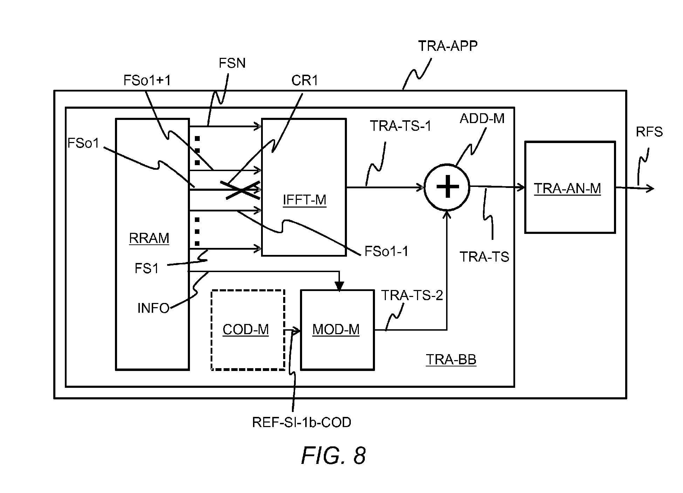

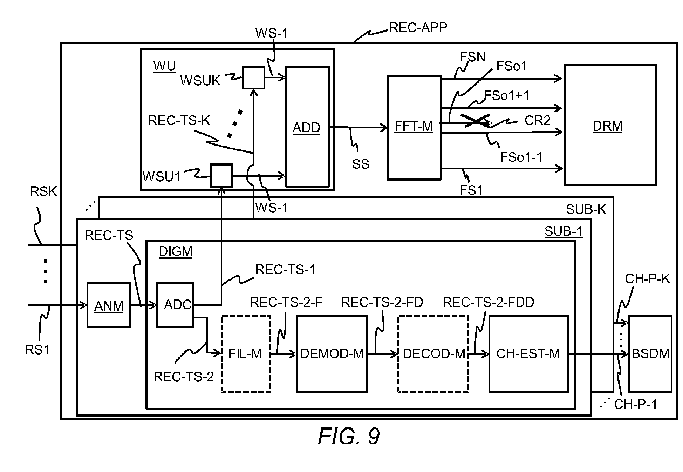

In a first optional step TRA-S1, a transmitter apparatus TRA-APP (see Figure 8) may negotiate with a receiver apparatus REC-APP (see Figure 9) one or several transmission parameters for a transmission of one or several predefined reference signals before the transmission of the at least one predefined reference signal starts. The transmission parameters may be for example an identification of radio resource units such as number of frequency subcarriers, frequency range, time range and/or number of time slots to be applied for the at least one predefined reference signal. A further transmission parameter may be for example a processing gain to be required at the transmitter apparatus and/or at the receiver apparatus. An even further transmission parameter may be for example a spreading code to be applied for the at least one predefined reference signal.

The negotiation may be done in such a way, that the transmitter apparatus TRA-APP (e.g. as part of the first mobile station UE1 or of the micro base station BS2) obtains an instruction to transmit the at least one predefined reference signal distinguishable from at least one further predefined reference signal, which is transmitted from at least one further transmitter apparatus (e.g. as part of the second mobile station UE2 or of the micro base station BS3). A differentiation may be achieved for example by transmitting the at least one predefined reference signal and the at least one further predefined reference signal with different codes or by different groups of radio resource units (i.e. by different time slots and/or different frequency subcarriers).

The negotiation may be based on a message exchange between the transmitter apparatus and the receiver apparatus. Preferably, the message exchange may be executed in a second wavelength range or in a second frequency range with considerably lower path loss than existing in a first wavelength range or in a first frequency range, which is applied for a transmission of the at least one predefined reference signal. The second wavelength range may preferably consist of larger wavelengths than wavelengths of the first wavelength range. The first wavelength range may be for example a mm-wavelength range and the second wavelength range may be for example a centimeter wavelength range. The second wavelength range may be for example provided by a GSM/GPRS random access channel (GSM = Global System for Mobile Communication, GPRS = General Packet Radio Service), a UMTS random access channel (UMTS = Universal Mobile Telecommunication Systems) or an LTE random access channel.

According to an alternative embodiment, the one or several transmission parameters may also be configured with some default settings during manufacturing or installation of base station equipment and/or mobile station equipment.

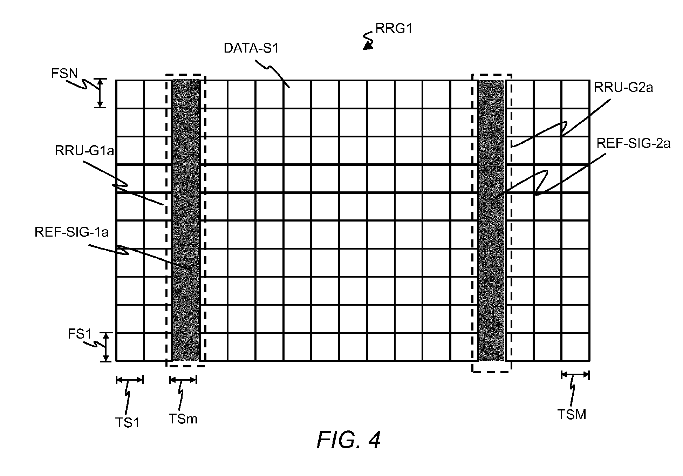

In a next sub-step TRA-S2-1 of a step TRA-S2, the transmitter apparatus TRA-APP allocates one predefined reference signal to one group of radio resource units or several predefined reference signals to several groups of radio resource units for a transmission via one of the access links AL1, AL2 (see Figure 1) or via one of the backhaul links BL1, BL2 (see Figure 2) by using for example a radio resource allocation mode as sketched in Figure 4. This Figure shows a grid RRG1 of radio resource units for the access links AL1, AL2 or the backhaul links BL1, BL2. In time direction (x coordinate of the grid RRG1) a number of time slots TS1, ..., TSM is shown. The time slots TS1, ..., TSM may have for example a duration of 0.5 ms as applied for example for a so-called type 1 LTE frame structure. The y coordinate of the grid RRG1 shows a number of frequency subcarriers FS1, ..., FSN. The frequency subcarriers FS1, ..., FSN may have for example a spacing of 15 kHz such as applied in LTE. All frequency subcarriers add up for example in LTE to channel bandwidths of 1.4 MHz, 3 MHz, 5 MHz, 10 MHz, 15 MHz or 20 MHz. In case of LTE one OFDM data symbols DATA-S1 for signalling data or user data can be allocated to each radio resource unit.

As shown in Figure 4, instead of allocating a number of OFDM symbols to a group RRU-G1a of adjacent radio resource units in case of DS-spread spectrum or DS-CDMA (DS = Direct Sequence, CDMA = Code Division Multiple Access) for example a predefined DS-spread spectrum reference signal REF-SIG-1a may be allocated to the group RRU-G1a of adjacent radio resource units. This means, the predefined DS-spread spectrum reference signal REF-SIG-1a will be transmitted within a grid of OFMA symbols. Thereby, the predefined DS-spread spectrum reference signal REF-SIG-1a is distributed across the group RRU-G1a of adjacent radio resource units.

During OFDM transmission, symbol duration $T_{symbol}$ of an OFDM symbol may be given for example by following equation:

$$T_{symbol} = N \cdot T_{sample} \qquad (1)$$

in which

N: FFT size (FFT = Fast Fourier Transformation), corresponding to a number of time samples of an OFDM symbol without cyclic prefix,
$T_{sample}$: OFDM sample period time.

A relation between subcarrier spacing and sample period time may be given for example by following equation:

$$\Delta f_{subcarrier} = \frac{1}{(T_{sample} \cdot N)} \qquad (2)$$

in which

$\Delta f_{subcarrier}$: bandwidth of a frequency subcarrier.

When inserting the predefined DS-spread spectrum reference signal REF-SIG-1a, a predefined reference signal may be spread in frequency with a chip frequency $f_{chip}$ according to following equation for example:

$$T_{chip} = \frac{1}{f_{chip}} = T_{sample} \qquad (3)$$

in which

$T_{chip}$: time duration of a chip.

This means that instead of an OFDM symbol a DS-spread-spectrum reference signal REF-SIG-1a can be transmitted with a chip rate identical to the OFDM sampling frequency and thus realizing a spreading by a factor of N.
A processing gain $PG$ at the receiver apparatus REC-APP may be given in such a case for example by following equation:

$$PG = 10 \cdot \log(N) \qquad (4)$$

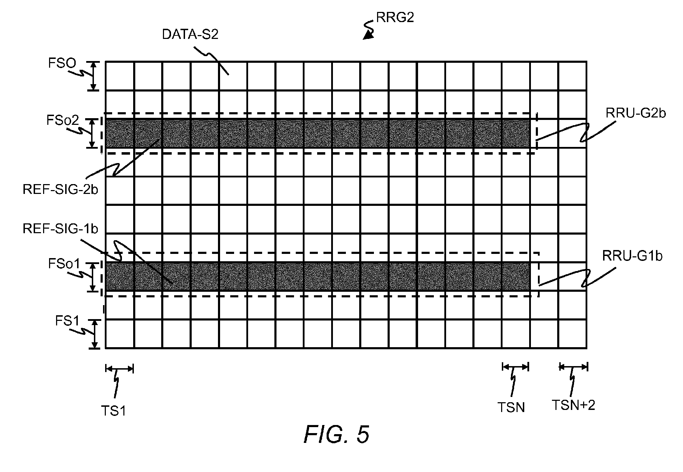

Depending on an overall system design, the parameter $N$ may be preferably in a range of several hundred up to a thousand or two thousand. This will lead to a processing gain of around 30 dB or even more.
Several possibilities exist for choosing the parameter $N$ (see Figures 4 and 5):
Only the predefined DS-spread spectrum reference signal REF-SIG-1a is distributed across a single time slot TSm and a number of $N$ frequency subcarriers FS1, ..., FSN and no OFDM symbols for signalling data or user data are allocated to the single time slot TSm and the number of $N$ frequency subcarriers FS1, ..., FSN. The frequency subcarriers FS1, ..., FSN may cover a whole channel bandwidth of 1.4 MHz, 3 MHz, 5 MHz, 10 MHz, 15 MHz or 20 MHz. Alternatively, the frequency subcarriers FS1, ..., FSN may cover only a part of the channel bandwidths of 1.4 MHz, 3 MHz, 5 MHz, 10 MHz, 15 MHz or 20 MHz. Such a radio resource allocation may be preferably applied for an initial determination and calibration of the set of beamforming weights already at the receiver apparatus REC-APP.
Further predefined DS-spread spectrum reference signals REF-SIG-2a may be transmitted by further groups RRU-G2a of adjacent radio resource units from time to time, either for further support of the initial determination and calibration, or for an irregular fine tuning when needed or for a periodical fine tuning of the set of beamforming weights at the receiver apparatus REC-APP. In such a case, the further predefined DS-spread spectrum reference signals REF-SIG-2a and OFDM data symbols may be allocated to the further further groups RRU-G2a of adjacent radio resource units. Alternatively, for fine tuning operation the further predefined DS-spread spectrum reference signals REF-SIG-2a may be overlayed to the OFDM data symbols.
Figure 5 shows a further embodiment for allocating predefined DS-spread spectrum reference signals REF-SIG-1b, REF-SIG-2b each to a group RRU-G1b, RRU-G2b of adjacent radio resource units of a further exemplarily grid RRG2 of radio resource units. The grid RRG2 shows a number TSN+2 of time slots TS1, ..., TSN+2 and a number FSO of frequency subcarriers FS1, ..., FSO. The grid RRG2 may be for example also a grid of LTE radio resource units as described with respect the grid RRG1 (see Figure 4). In case of LTE one OFDM data symbol DATA-S2 for signalling data or user data can be allocated to each radio resource unit.
A predefined DS-spread spectrum reference signal REF-SIG-1b is allocated to a group RRU-G1b of adjacent radio resource units by spreading the first predefined DS-spread spectrum reference signal REF-SIG-1b only over a single frequency subcarrier FSo1 but over a group of N time slots TS1, ..., TSN.
For improving the initial determination and calibration of the set of beamforming weights already at the receiver apparatus REC-APP, further predefined DS-spread spectrum reference signals REF-SIG-2b may be allocated to further groups RRU-G2b of adjacent radio resource units by spreading the further predefined DS-spread spectrum reference signals REF-SIG-2b only over further single frequency subcarriers FSo2 but also over the group of *N* time slots TS1, ..., TSN.

For the irregular fine tuning or for the periodical fine tuning of the set of beamforming weights at the receiver apparatus REC-APP, further predefined DS-spread spectrum reference signals may be allocated to further groups of adjacent radio resource units by spreading the further predefined DS-spread spectrum reference signals only over a further single frequency subcarrier but over further groups of N time slots (not shown in Figure 5 for simplification).

According to a further alternative embodiment (not shown in Figure 4 and Figure 5 for simplification), a predefined DS-spread spectrum reference signal may be allocated to a group of adjacent radio resource units by spreading the predefined DS-spread spectrum reference signal over several adjacent frequency subcarriers and over several time slots for covering in sum a number *N* of radio resource units. Such an embodiment may be preferably applied for the initial determination and calibration of the set of beamforming weights already at the receiver apparatus REC-APP.

In an even further embodiment instead of spreading at least one predefined reference signal in time and/or in frequency a predefined bit sequence may be repeated and the whole repeated bit sequence may be allocated to a group of adjacent radio resource units in a similar way as shown in Figure 4 and Figure 5 for the spreading of the at least one predefined reference signal.

Preferably, the number *N* of radio resource units required for spreading the predefined reference signal or for repeating the bit sequence in time or frequency, which allow for the irregular fine tuning or for the period fine tuning of the set of beamforming weights at the receiver apparatus REC-APP, may be adapted to a varying path loss of the access links AL1, AL2 or the backhaul links BL1, BL2.

Back to Figure 3 in a further step TRA-S3 it may be verified, whether user data and/or signalling data needs to be transmitted. When no user data and no signalling data need to be transmitted, the step TRA-S2 may be the next step. When user data and/or signalling data need to be transmitted, step TRA-S4 may be a further step.

By the further step TRA-S4 it may be verified, whether the transmitter apparatus TRA-APP transmits the at least one predefined reference signal for an initial calibration of the set of beamforming weights at the receiver apparatus REC-APP or for a fine tuning of the set of beamforming weights at the receiver apparatus REC-APP.

When the at least one predefined reference signal will be transmitted for the fine tuning of the set of beamforming weights at the receiver apparatus REC-APP (no initial calibration), sub-step TRA-S2-2 of the step TRA-S2 may be a next step. By the step TRA-S2-2, at least one data signal such as at least one OFDM data signal may be allocated to the same group of radio resource units as applied for the at least one predefined reference signal. Thereby, the at least one predefined reference signal is overlaid to the at least one OFDM data signal. Such an overlay saves radio resources and can be done, if the transmit power of the predefined reference signal on each resource unit is small enough to guarantee a sufficiently high signal to noise ratio of the OFDM data signal. Since the predefined reference signal is spread over multiple resource units, de-spreading can make use of a processing gain, so that the reference signal will not be disturbed by the underlying OFDM data signal.

When the at least one predefined reference signal will be transmitted for the initial calibration of the set of beamforming weights at the receiver apparatus REC-APP, sub-step TRA-S2-3 of the step TRA-S2 may be executed next. The sub-step TRA-S2-3 allocates at least one data signal such as at least one OFDM data signal to at least one radio resource unit, which is different to the at least one group of radio resource units, which is applied for the at least one predefined reference signal. This means, there is no overlay between the at least one predefined reference signal and the at least one OFDM data signal.

In a next step TRA-S5, the at least one predefined reference signal REF-SIG-1a, REF-SIG-2a, REF-SIG-1b, REF-SIG-2b, which is allocated to the at least one group RRU-G1a, RRU-G2a, RRU-G1b, RRU-G2b of radio resource units is transmitted via one of the access links AL1, AL2 or one of the backhaul links BL1, BL2. When user data and/or signalling data need to be transmitted at a same time, also the user data and/or the signalling data may be transmitted together with the at least one predefined reference signal REF-SIG-1a, REF-SIG-2a, REF-SIG-1b, REF-SIG-2b via the one of the access links AL1, AL2 or the one of the backhaul links BL1, BL2.

The at least one predefined reference signal REF-SIG-1a, REF-SIG-2a, REF-SIG-1b, REF-SIG-2b can be transmitted in different ways via antenna elements BS1-AE1, BS1-AE2, UE1-AE1, UE1-AE2, UE2-AE1, UE2-AE2 of the antenna arrays BS1-AS, UE1-AS, UE2-AS, BS1-AS2, BS2-AS2, BS3-AS2 dependent on a current state of a beam pattern establishment procedure between two network nodes such as the base station BS1-1 and the first mobile station UE1 (see Figure 1; similar procedures may be applied between the other network node pairs for the access link AL2 and the backhaul links BL1, BL2):

At a beginning of the beam pattern establishment procedure for an initial calibration of the set of beamforming weights at the antenna array UE1-AS of the first mobile station MS1, the base station BS1-1 may transmit in a first phase a first predefined reference signal according to the embodiments via a single antenna element of the antenna array BS1-AS and the first mobile station MS1 receives at the antenna element UE1-AE1 and at the antenna element UE1-AE2 the first predefined reference signal and determines a first channel estimate for the antenna element UE1-AE1 and a second channel estimate for the antenna element UE1-AE2 of the transmission channel AL1 based on the first predefined reference signal and determines the set of beamforming weights for the antenna array UE1-AS.

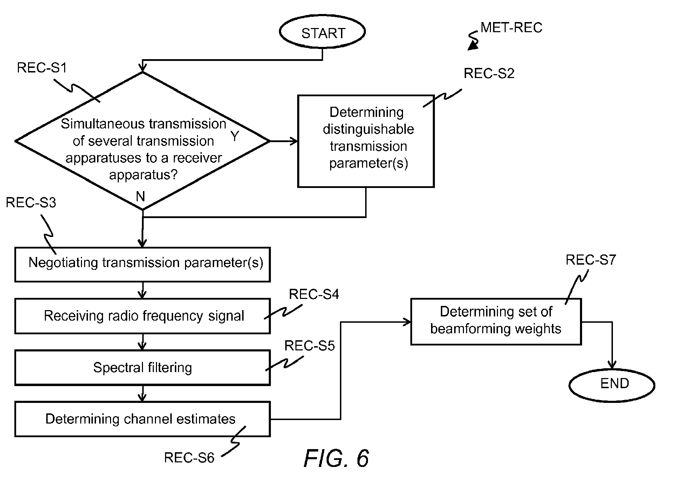

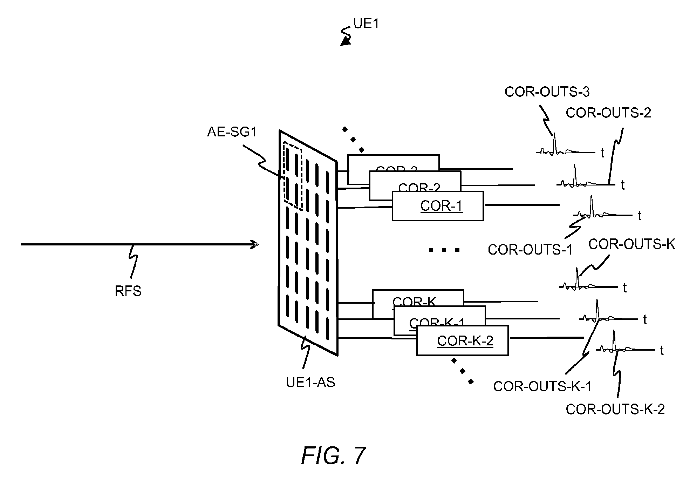

In a second phase or in parallel to the first phase for an initial calibration of a further set of beamforming weights at the antenna array BS1-AS of the base station BS1-1, the first mobile station UE1 may transmit a second predefined reference signal according to the embodiments via a single antenna element of the antenna array UE1-AS. The base station BS1-1 receives at the antenna element BS1-AE1 and at the antenna element BS1-AE2 the second predefined reference signal and determines a first channel estimate for the antenna element BS1-AE1 and a second channel estimate for the antenna element BS1-AE2 of the transmission channel AL1 based on the second predefined reference signal and determines the further set of beamforming weights for the antenna array BS1-AS, which is described below in more detail with respect to Figures 6 and 7.

When the further set of beamforming weights has been determined, the base station BS1-1 may transmit in a third phase a further first predefined reference signal according to the embodiments with a directional beam pattern from several or all antenna elements of the antenna array BS1-AS by applying the further set of beamforming weights. During the third phase, the further first predefined reference signal may be either transmitted with smaller transmit power than applied for the initial calibration or may even allocate the further first predefined reference signal with a first transmission power and data signals with a second transmission power larger than the first transmission power simultaneously to same radio resource units. Thereby, a distortion of the regular communication of user data and signalling data between the base station BS1-1 and the first mobile station UE1 by transmitting the predefined reference signals according to the embodiments may be reduced.

In one embodiment, when the further set of beamforming weights has been determined by an initial calibration, the base station BS1-1 may transmit a further first predefined reference signal such as a first DS-CDMA signal according to the embodiments with a first directional beam pattern from several or all antenna elements of the antenna array BS1-AS by applying a first set of beamforming weights and by applying at least one further first group of radio resource units and may transmit simultaneously at least one even further first predefined reference signal such as a second DS-CDMA signal according to the embodiments with at least one second directional beam from the several or all antenna elements of the antenna array BS1-AS by applying at least one second set of beamforming weights different to the first set of beamforming weights and by applying at least one further second group of radio resource units. Thereby, a fine tuning of the set of beamforming weights at the antenna array UE1-AS of the first mobile station MS1 may be improved and accelerated to determine optimum beamforming weights.

In a further embodiment, the base station BS1-1 may transmit in a non-directional way distinguishable predefined reference signals according to the embodiments from each of the antenna elements BS1-AE1, BS1-AE2 of the antenna array BS1-AS. This means that for example a first predefined reference signal according to the embodiments may be encoded with a first code and may be transmitted from a first antenna element BS1-AE1 of the antenna array BS1-AS and a second predefined reference signal according to the embodiments may be encoded with a second code for differentiation and may be transmitted from a second antenna element BS1-AE2 of the antenna array BS1-AS. Alternatively, the first predefined reference signal and the second predefined reference signal according to the embodiments may be transmitted by separate groups of radio resource units for differentiation. Such a transmission may be used to calibrate and/or optimize and/or enable a MIMO transmission scheme between the base station BS1-1 and the first mobile station UE1.

The above described embodiments for the transmitter method MET-TRA are based on DS-spread spectrum or DS-CDMA. A similar principle may be applied for other access methods such as MC-CDMA (MC = Multi Carrier). This will be not explained in further detail because a skilled person will be able to adapt the above described embodiments to the other access methods in a straightforward way.

Figure 6 shows a flow diagram of a receiver method MET-REC for determining a set of beamforming weights. The number of the steps for performing the method MET-REC is not critical, and as can be understood by those skilled in the art that the number of the steps and the sequence of the steps may vary without departing from the scope of the embodiments of the invention as defined in the appended claims.

The method MET-REC may be executed or performed by one of the network nodes BS1-1, UE1, UE2, BS1-2, BS2, BS3, which are described above with respect to Figure 1 and Figure 2. The method MET-REC may be started for example when a corresponding network node is switched on or when a fine tuning of beamforming weights for one of the access links AL1, AL2 or the backhaul links BL1, BL2 is required.

In a first optional step REC-S1, it may be verified, whether two or more transmission apparatuses may transmit predefined reference signals according to the embodiments simultaneously to the receiver apparatus REC-APP, which may execute the receiver method MET-REC. When such a simultaneous transmission is planned, step REC-S2 may be a next step. When else no such simultaneous transmission is required, step REC-S3 may be a further step.

By the step REC-S2 at least one distinguishable transmission parameter may be determined for a transmission of the predefined reference signals according to the embodiments from the at least two transmission apparatuses to the receiver apparatus REC-APP. For a first transmission apparatus from a first of the at least two transmission apparatuses a first transmission code or a first group of radio resource units and for at least one second transmission from a second of the at least two transmission apparatuses a second transmission code or a second group of radio resource units may be determined.

According to an alternative embodiment, the transmission codes or the groups of radio resource units may be configured with some default settings during manufacturing or installation of the base station equipment and/or the mobile station equipment.

The further step REC-S3 is the counterpart step of the step TRA-S1 of the transmitter method MET-TRA. Thereby, a network node such as the base station BS1-1, which contains the receiver apparatus REC-APP may transmit to a further network node such as the first mobile station UE, which contains the transmitter apparatus TRA-APP, the one or several transmission parameters, which may have been determined for example by the step REC-S2.

By a next step REC-S4, a radio frequency signal RFS may be received individually at antenna elements of an antenna array, which is connected to the receiver apparatus REC-APP. The radio frequency signal RFS may contain the at least one predefined reference signal according to the embodiments and optionally in addition at least one data signal. The reception of the radio frequency signal RFS is explained in more detail with respect to Figure 7, which exemplarily shows the antenna array UE1-AS of the first mobile station UE. The antenna array UE1-AS may have a number of $K$ antenna elements.

In one embodiment as shown in Figure 7, each one of a number of $K$ correlators COR-1, COR-2, COR-3, .., COR-K-2, COR-K-1, COR-K may be connected to one antenna element of the number of $K$ antenna elements. In such a case, the predefined reference signal according to the embodiments is received and evaluated at each antenna element of the antenna array UE1-AS.

According to an alternative embodiment, in each case for example four antenna elements may be grouped to sub-groups of antenna elements and each sub-group may be connected to a dedicated correlator. Only one sub-group AE-SG1 of the sub-groups is sketched in Figure 7 for simplification. Each sub-group AE-SG1 needs to be calibrated. This means that phase relations among antenna elements of a single sub-group needs to be known, so that a subgroup is operating like one element with a specific known beam pattern (see for example S. S. Jeon, Y. Wang, Y. Qian and T. Itoh, "A novel planar array smart antenna system with hybrid analogue-digital beamforming", IEEE MTT-S Int. Microwave Symp. Dig., vol. 1, pp. 121-124, May 2001) and thus is not further explained. Based on the alternative embodiment, the predefined reference signal according to the embodiments is received and evaluated at each sub-group AE-SG1 of antenna elements of the antenna array UE1-AS.

Because of the processing gain of the predefined reference signal, which is distributed across a group of radio resource units and which contains for example at a minimum only one bit with a known modulation, the predefined reference signal can be detected individually at each antenna element or at each sub-group of antenna elements and can be provided to the correlators COR-1, COR-2, COR-3, ..., COR-K-2, COR-K-1, COR-K. Each one of the correlators COR-1, COR-2, COR-3, ..., COR-K-2, COR-K-1, COR-K outputs a signal COR-OUTS-1, COR-OUTS-2, COR-OUTS-3, ..., COR-OUTS-K-2, COR-OUTS-K-1, COR-OUTS-K in a time domain with a corresponding phase value and amplitude value. These phase values and amplitude values may represent channel estimates between the antenna array BS1-AS of the base station BS1-1 and each antenna element of the antenna array UE1-AS of the first mobile station UE1.

In a further optional step REC-S5, the signals of each antenna element or each subgroup of antenna elements may be spectrally filtered, before being provided to the correlators COR-1, COR-2, COR-3, ..., COR-K-2, COR-K-1, COR-K, when the predefined reference signal according to the embodiments does not fully cover a frequency band of the access link AL1. Thereby, the predefined reference signal according to the embodiments can be extracted from the signals COR-OUTS-1, COR-OUTS-2, COR-OUTS-3, .., COR-OUTS-K-2, COR-OUTS-K-1, COR-OUTS-K, which may also contain at least one data signal.

In a next step REC-S6, the channel estimates of the transmission channel, e.g. the access link AL1 between the base station BS1-1 and the first mobile station UE1, may be determined preferably for each antenna element. For that purpose, the phase values and the amplitude values of the signals COR-OUTS-1, COR-OUTS-2, COR-OUTS-3, ..., COR-OUTS-K-2, COR-OUTS-K-1, COR-OUTS-K may be applied for example. By such estimation, transmission channel parameters such as channel impulse responses may be obtained which is not described here in further detail because of being common knowledge of a person skilled in the art.

By a further step REC-S7, the set of beamforming weights to be applied at the antenna array UE1-AS may be determined based on the transmission channel parameters, which have been obtained by the prior step. The set of beamforming weights may be determined for example by an MRC beamformer (MRC = Maximum/Maximal Ratio Combining). The set of beamforming weights can be used in the following for a transmission of further radio frequency signals from the antenna array UE1-AS or for a reception of even further radio frequency signals at the antenna array UE1-AS.

The above described embodiments for the receiver method MET-REC may be based on DS-spread-spectrum or DS-CDMA. A similar principle may be applied for other access methods such as MC-CDMA (MC = Multi Carrier). This will be not explained in further detail because a skilled person will be able to adapt the above described embodiments to the other access methods in a straightforward way.

Figure 8 shows schematically a block diagram of the transmitter apparatus TRA-APP for supporting a determination of a set of beamforming weights by the receiver apparatus REC-APP (see Figure 9). A splitting of processing functions across processing units shown in Figure 8 is not critical, and as can be understood by those skilled in the art that the number of processing units, the number of processing functions and an allocation of the processing functions to the processing units may vary without departing from the scope of the embodiments of the invention as defined in the appended claims.

The exemplarily shown transmitter apparatus TRA-APP contains a digital baseband board TRA-BB and an analogue processing module TRA-AN-M. The digital baseband board TRA-BB contains a radio resource allocation module RRAM, which allocates for example according to Figure 5 signalling data or user data to the frequency subcarriers FS1, ..., FSo1-1, FSo1+1, ..., FSN. The radio resource allocation module RRAM does not allocate signalling data or user data to the frequency subcarrier FSo1, which is indicated by a cross CR1 in Figure 8. The radio resource allocation module RRAM further allocates for example the predefined reference signal REF-SIG-1b to the frequency subcarrier FSo1.

The digital baseband board TRA-BB further contains a converting module IFFT-M, which converts the frequency subcarriers FS1, ..., FSo1-1, FSo1+1, ..., FSN for example by an IFFT (IFFT = Inverse Fast Fourier Transformation) into a first signal TRA-TS-1 in the time domain.

The digital baseband board TRA-BB may further contain a coding module COD-M, which may encode the predefined reference signal REF-SIG-1b for obtaining a coded predefined reference signal REF-SIG-1b-COD, which is distinguishable at the receiver apparatus REC-APP from further predefined reference signals, which are transmitted from further transmitter apparatuses.

The digital baseband board TRA-BB further contains a modulation module MOD-M, which may receive information INFO from the radio resource allocation module RRAM about the frequency subcarrier FSo1, which is allocated to the predefined reference signal REF-SIG-1b. The modulation module MOD-M modulates the (encoded) predefined reference signal REF-SIG-1b and provides a second signal TRA-TS-2 in the time domain in such a way, that the second signal TRA-TS-2 only has spectral components of the frequency subcarrier FSo1.

The digital baseband board TRA-BB further contains an addition module ADD-M such as a digital adder, which overlays the first signal TRA-TS-1 and the second signal TRA-TS-2 and provide an overall signal TRA-TS in the time domain. Alternatively, when the first signal TRA-TS-1 and the second signal TRA-TS-2 are converted into analogue signals separately, the addition module ADD-M may be an active analogue adder or a passive resistor network.

The analogue processing module TRA-AN-M obtains the overall signal TRA-TS as an input signal and performs common processing functions such as digital-to-analogue conversion, pre-distortion and amplification to generate a radio frequency signal RFS, which is output by the transmitter apparatus TRA-APP and is provided to a connected antenna array such as one of the antenna arrays BS1-AS, UE1-AS, UE2-AS, BS1-AS2, BS2-AS2, BS3-AS2.

A person skilled in the art may easily adapt the digital baseband board TRA-BB based on the description with respect to the embodiment shown in Figure 5 to the further embodiment, which is described with respect to Figure 4. Therefore, a version of the digital baseband board TRA-BB for the further embodiment is not described for simplification.

Figure 9 shows schematically a block diagram of the receiver apparatus REC-APP for determining the set of beamforming weights. A splitting of processing functions across processing units shown in Figure 9 is not critical, and as can be understood by those skilled in the art that the number of processing units, the number of processing functions and an allocation of the processing functions to the processing units may vary without departing from the scope of the embodiments of the invention as defined in the appended claims.

The exemplarily shown receiver apparatus REC-APP contains subunits SUB-1, ..., SUB-K for each antenna element, a determination module BS-D-M for determining the set of beamforming weights, a weighting unit WU, a converting module FFT-M, and a data recovery module DRM.

A first subunit SUB-1 may contain for example an analogue processing module ANM and a digital processing module DIGM. The analogue processing module ANM receives a first radio frequency signal RS1 from a first antenna element of a connected receiving antenna array and performs common processing functions such as pre-amplification or analogue-to-digital conversion and outputs a signal REC-TS in the time domain. The digital processing module DIGM may contain an analogue-to-digital converter ADC, which may output a first digital copy REC-TS-1 of the signal REC-TS and a second digital copy REC-TS-2 of the signal REC-TS.

The first digital copy REC-TS-1 is provided to a first weighting subunit WSU1 of the weighting unit WU. The first weighting subunit WSU1 weights the first digital copy REC-TS-1 according to a first weighting factor, which is applied for the first antenna element of the connected receiving antenna array. The first weighting subunit WSU1 outputs a first weighted signal WS-1, which is provided to an adder ADD of the weighting unit WU.

In a same way, further first digital copies such as a further first digital copy REC-TS-K are provided to further weighting subunits such a further weighting subunit WSUK of the weighting unit WU. The further weighting subunit WSUK weights the further digital copy REC-TS-K according to a further weighting factor, which is applied for a K-th antenna element of the connected receiving antenna array. The further weighting subunit WSUK outputs a further weighted signal WS-K, which is also provided to the adder ADD. The adder ADD adds the weighted signals WS-1, ..., WS-K and outputs a sum signal SS.

The sum signal SS is provided to the converting module FFT-M, which converts the sum signal SS for example by an FFT (FFT = Fast Fourier Transformation) into the frequency subcarriers FS1, ..., FSo1-1, FSo1+1, ..., FSN. Thereby, no frequency subcarrier FSNo1 is obtained, which is sketched in Figure 9 by a cross CR2. In case of using the full frequency band for the duration of one OFDM symbol for reference signals, during that OFDM symbol none of the subcarriers contains any data signal.

The frequency subcarriers FS1, ..., FSo1-1, FSo1+1, ..., FSN are provided to the data recovery module DRM recovers the signalling data or the user data from the frequency subcarriers FS1, ..., FSo1-1, FSo1+1, ..., FSN.

With respect to the second digital copy REC-TS-2 the digital processing module DIGM may further contain a spectral filtering module FIL-M, which may extract from the second digital copy REC-TS-2 a filtered predefined reference signal REC-TS-2-F according to the embodiments, when the predefined reference signal does not cover the whole frequency band of one of the access links AL1, AL2 or the backhaul links BL1, BL2.

The digital processing module DIGM further contains a demodulation module DEMOD-M, which demodulates the filtered predefined reference signal REC-TS-2-F and provides a demodulated and filtered predefined reference signal REC-TS-2-FD.

The digital processing module DIGM may further contain a decoding module DECOD-M, which may decode the demodulated and filtered predefined reference signal REC-TS-2-FD, when the predefined reference signal has been encoded by the transmitted apparatus TRA-APP and outputs a predefined reference signal REC-TS-2-FDD.

The digital processing module DIGM further contains a channel estimation module CH-EST-M, which estimates the transmission channel of one of the access links AL1, AL2 or of the backhaul links BL1, BL2 based on the predefined reference signal REC-TS-2-FDD, determines the corresponding transmission channel parameters as described above and outputs corresponding information CH-P-1 of the transmission channel parameters.

In a similar way further subunits such as a subunit SUB-K perform a similar processing for further radio frequency signals such as a further radio frequency signal RSK being received from a K-th antenna element of the connected receiving antenna array. The subunit SUB-K outputs further corresponding information CH-P-K of the transmission channel parameters.

The determination module BSDM determines the set of beamforming weights based on the information CH-P-1, ..., CH-P-K of the transmission channel parameters received from the subunits SUB-1, ..., SUB-K.

The correlator COR-1 which is shown in Figure 7 is part of the demodulation module DEMOD-M and the decoding module DECOD-M of the first subunit SUB-1. In a similar way correlators COR-2, COR-3, ..., COR-K-2, COR-K-1, COR-K are part of further demodulation modules and decoding modules of the further subunits including subunit SUB-K.

In a practical system a signal processing may be adapted to a specific structure of the predefined reference signal. If the specific structure is a spread-spectrum signal or CDMA, the demodulation consists of a de-spreading and peak detection (most straightforward by correlation). From the peak of the correlator COR-1 the phase and amplitude are used to estimate the channel in the channel estimation module CH-EST-M.

If other signals than CDMA signals are applied, the demodulation module DEMOD and the decoding module DECOD might be different and the receiver apparatus REC-APP may be easily adapted by a person skilled in the art based on the description of the elaborated embodiments.

In comparison to the detailed embodiment of Figure 9 previous Figure 7 relates to a principal functional description. The receiver method works either with digital correlation as described with respect to the

Figure 9, or with analogue correlation and sampling of the peaks and digital processing of the peak output of analogue correlators. In that case, also the spectral filtering module FIL-M must be an analogue device located in front of the correlators. It is well known for persons skilled in the art that all functions may be either analogue or digital based. This means, that a location of the analogue-to-digital converter ADC as part of the digital processing module DIGM can be either where the digital processing module DIGM is located with respect to the Figure 9, or the digital processing module DIGM may be located at any other internal interface depending on whether the functional blocks are realized in an analogue way or a digital way.

A person skilled in the art may easily adapt the receiver apparatus REC-APP based on the description with respect to the embodiment shown in Figure 5 to the further embodiment, which is described with respect to Figure 4. Therefore, a version of the receiver apparatus REC-APP for the further embodiment is not described for simplification.

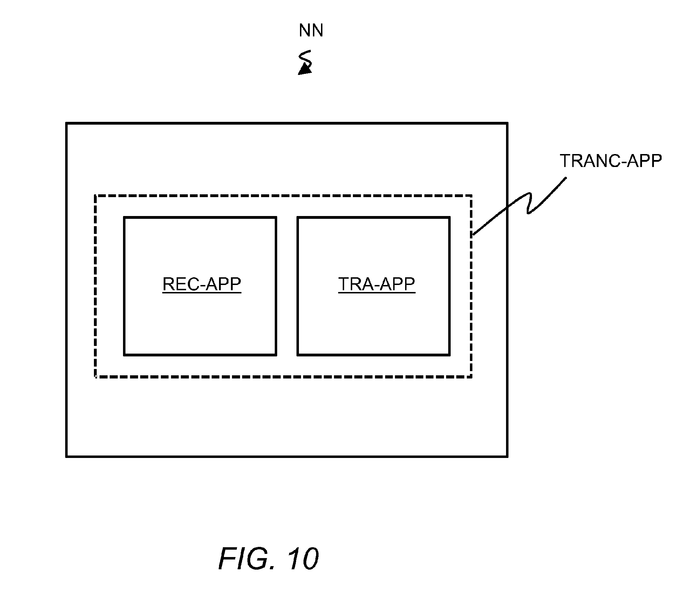

Figure 10 shows a block diagram of a network node NN, which contains the transmitter apparatus TRA-APP and the receiver apparatus REC-APP. The transmitter apparatus TRA-APP and the receiver apparatus REC-APP may be components of a transceiver apparatus TRANC-APP. The network node NN may be the base station BS1-1, one of the mobile stations UE1, UE2, the macro base station BS1-2 or one of the micro base stations BS2, BS3.

When alternatively, the access links AL1, AL2 or the backhaul links BL1, BL2 may be unidirectional transmission channels, the network node NN may either only contain the transmitter apparatus TRA-APP or only contain the receiver apparatus REC-APP.

In one embodiment, the network node NN such as the base station BS1-1 or the macro base station BS1-2 may be adapted to execute simultaneously an initial calibration of the set of beamforming weights for an antenna array of the network node NN such as the antenna array BS1-AS or BS1-AS2 by receiving a first predefined reference signal, which is distributed across a first group of radio resource units of the transmission channel BL1, AL1 between an antenna array BS2-AS2 or UE1-AS of a further network node such as the first mobile station UE1 or the micro base station BS2 and the antenna array BS1-AS, BS1-AS2 and a transmission from the antenna array BS1-AS, BS1-AS2 to the antenna array BS2-AS2 or UE1-AS of the further network node of a second predefined reference signal distributed across at least one second group of radio resource units of the transmission channel BL1, AL1.

In a further embodiment, when an initial calibration of the set of beamforming weights for the antenna array of the network node NN by applying the receiver apparatus REC-TRA is finished, the network node NN may be adapted to operate the transmitter apparatus TRA-APP by either transmitting via one antenna element of the antenna array of the network node NN a further predefined reference signal according to the embodiments in a non-directional way or transmitting via several or all antenna elements of the antenna array of the network node NN the further predefined reference signal according to the embodiments in a directional way by applying the calibrated set of beamforming weights.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for transmitting", "means for receiving", "means for determining" etc. (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, DSP hardware, network processor, ASIC, FPGA, read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the method MET disclosed in the specification or in the claims may be implemented by a device having means for performing each of the respective steps of these methods. Preferably, a computer program product may contain computer-executable instructions for performing the method MET, when the computer program product is executed on a programmable hardware device such as a DSP, an ASIC or an FPGA. Preferably, a digital data storage device may encode a machine-executable program of instructions to perform one of the transmitter method MET-TRA and the receiver method MET-REC.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A transmitter method (MET-TRA) for supporting a determination of a set of beamforming weights by a receiver method (MET-REC) comprising:

   - allocating (TRA-S2) a predefined reference signal (REF-SIG-1a, REF-SIG-2a, REF-SIG-1b, REF-SIG-2b) to at least one group of radio resource units (RRU-G1a, RRU-G2a, RRU-G1b, RRU-G2b) of a transmission channel (BL1, AL1) between a first antenna array (BS1-AS2, BS1-AS) and a second antenna array (BS2-AS2, UE1-AS), and
   - transmitting (TRA-S5) said predefined reference signal (REF-SIG-1a, REF-SIG-2a, REF-SIG-1b, REF-SIG-2b) via said transmission channel (BL1, AL1) from said first antenna array (BS1-AS2, BS1-AS) to said second antenna array (BS2-AS2, UE1-AS).

2. Transmitter method (MET-TRA) according to claim 1, wherein said allocating (TRA-S2) only allocates said predefined reference signal (REF-SIG-1a, REF-SIG-2a, REF-SIG-1b, REF-SIG-2b) to said at least one group of radio resource units (RRU-G1a, RRU-G2a, RRU-G1b, RRU-G2b) preferably for an initial adjustment of said set of beamforming weights or wherein said allocating (TRA-S2) further allocates data signals to said at least one group of radio resource units (RRU-G1a, RRU-G2a, RRU-G1b, RRU-G2b) for an overlay of said predefined reference signal (REF-SIG-1a, REF-SIG-2a, REF-SIG-1b, REF-SIG-2b) to said data signals preferably for a fine tuning of said set of beamforming weights.

3. Transmitter method (MET-TRA) according to any of the preceding claims, wherein said allocating (TRA-S2) comprises spreading a reference symbol in frequency or in time or in frequency and time or comprises repeating a predefined bit sequence in time or frequency preferably for a fine tuning of said set of beamforming weights.

4. Transmitter method (MET-TRA) according to any of the preceding claims, wherein said transmitting (TRA-S5) transmits said predefined reference signal (REF-SIG-1a, REF-SIG-2a, REF-SIG-1b, REF-SIG-2b) via a single antenna element of said first antenna array (BS1-AS2, BS1-AS) for said determination of said set of beamforming weights for said second antenna array (BS2-AS2, UE1-AS) or said transmitting (TRA-S5) transmits said predefined reference signal (REF-SIG-1a, REF-SIG-2a, REF-SIG-1b, REF-SIG-2b) with a directional beam pattern by applying a further set of beamforming weights being determined for said first antenna array (BS1-AS2, BS1-AS), or said transmitting (TRA-S5) transmits said predefined reference signal (REF-SIG-1a, REF-SIG-2a, REF-SIG-1b, REF-SIG-2b) distinguishable for a single antenna element (BS1-AE1, BS1-AE2) via all antenna elements (BS1-AE1, BS1-AE2) of said first antenna array (BS1-AS2, BS1-AS).

5. Transmitter method (MET-TRA) according to any of the preceding claims, wherein said transmitter method (MET-TRA) further comprises negotiating (TRA-S1) at least one transmission parameter of said predefined reference signal (REF-SIG-1a, REF-SIG-2a, REF-SIG-1b, REF-SIG-2b) with a network node (BS2, UE1) of said second antenna array (BS2-AS2, UE1-AS) before said transmitting (TRA-S11) of said predefined reference signal (REF-SIG-1a, REF-SIG-2a, REF-SIG-1b, REF-SIG-2b).

6. Transmitter method (MET-TRA) according to claim 5, wherein said transmitting (TRA-S5) transmits said predefined reference signal (REF-SIG-1a, REF-SIG-2a, REF-SIG-1b, REF-SIG-2b) in a first wavelength range preferably a millimeter wavelength range and wherein said negotiating (TRA-S1) comprises transmitting at least one signaling message in a second wavelength range preferably in a centimeter wavelength range.

7. Transmitter method (MET-TRA) according to any of the preceding claims, wherein said transmitting (TRA-S5) transmits said predefined reference signal (REF-SIG-1a, REF-SIG-2a, REF-SIG-1b, REF-SIG-2b) from a transmitter apparatus (TRA-APP) distinguishable to a further predefined reference signal being transmitted by a further transmitter apparatus.

8. A receiver method (MET-REC) for determining a set of beamforming weights comprising:

   - receiving (REC-S4) at a first antenna element (UE1-AE1) of a second antenna array (BS2-AS2, UE1-AS) and at at least one further antenna element (UE1-AE2) of said second antenna array (BS2-AS2, UE1-AS) via a transmission channel (BL1, AL1) from a first antenna array (BS1-AS2, BS1-AS) a predefined reference signal (REF-SIG-1a, REF-SIG-2a, REF-SIG-1b, REF-SIG-2b) allocated to at least one group of radio resource units (RRU-G1a, RRU-G2a, RRU-G1b, RRU-G2b) of said transmission channel (BL1, AL1),

- determining (REC-S6) based on said received predefined reference signal (REF-SIG-1a, REF-SIG-2a, REF-SIG-1b, REF-SIG-2b) a first channel estimation of said transmission channel (BL1, AL1) for said first antenna element (UE1-AE1) and at least one further channel estimation of said transmission channel (BL1, AL1) for said at least one further antenna element (UE1-AE2), and

- determining (REC-S7) said set of beamforming weights for a transmission from said second antenna array (BS2-AS2, UE1-AS) and/or a reception at said second antenna array (BS2-AS2, UE1-AS) based on said first channel estimation and said at least one further channel estimation.

9. Receiver method (MET-REC) according to preceding claim 8, wherein said receiver method (MET-REC) further comprises spectrally filtering (REC-S5) a received signal comprising said predefined reference signal (REF-SIG-1a, REF-SIG-2a, REF-SIG-1b, REF-SIG-2b) for extracting said predefined reference signal (REF-SIG-1a, REF-SIG-2a, REF-SIG-1b, REF-SIG-2b) from said received signal, when said at least one group of radio resource units (RRU-G1a, RRU-G2a, RRU-G1b, RRU-G2b) not fully covers a frequency band of said transmission channel (BL1, AL1).

10. Receiver method (MET-REC) according to claim 8 or claim 9, wherein said receiving (REC-S4) receives and evaluates said predefined reference signal (REF-SIG-1a, REF-SIG-2a, REF-SIG-1b, REF-SIG-2b) at all antenna elements (UE1-AE1, UE1-AE2) of said second antenna array (BS2-AS2, UE1-AS) or at all sub-groups (AE-SG1) of antenna elements of said second antenna array (UE1-AS), when said first antenna array (BS1-AS2, BS1-AS) transmit said predefined reference signal (REF-SIG-1a, REF-SIG-2a, REF-SIG-1b, REF-SIG-2b) by a single antenna element (BS1-AE1, BS1-AE2).

11. A transmitter apparatus (TRA-APP) for supporting a determination of a set of beamforming weights by a receiver apparatus (REC-APP) comprising:

- means (RRAM) for allocating a predefined reference signal (REF-SIG-1a, REF-SIG-2a, REF-SIG-1b, REF-SIG-2b) to at least one group of radio resource units (RRU-G1a, RRU-G2a, RRU-G1b, RRU-G2b) of a transmission channel (BL1, AL1) between a first antenna array (BS1-AS2, BS1-AS) and a second antenna array (BS2-AS2, UE1-AS), and

- means (TRA-AN-M) for transmitting said predefined reference signal (REF-SIG-1a, REF-SIG-2a, REF-SIG-1b, REF-SIG-2b) via said transmission channel (BL1, AL1) from said first antenna array (BS1-AS2, BS1-AS) to said second antenna array (BS2-AS2, UE1-AS).

12. A receiver apparatus (REC-APP) for determining a set of beamforming weights comprising:

- means (REC-AM-M) for receiving at a first antenna element (UE1-AE1) of a second antenna array (BS2-AS2, UE1-AS) and at at least one further antenna element (UE1-AE2) of said second antenna array (BS2-AS2, UE1-AS) via a transmission channel (BL1, AL1) from a first antenna array (BS1-AS2, BS1-AS) a predefined reference signal (REF-SIG-1a, REF-SIG-2a, REF-SIG-1b, REF-SIG-2b) allocated to at least one group of radio resource units (RRU-G1a, RRU-G2a, RRU-G1b, RRU-G2b) of said transmission channel (BL1, AL1),

- means (Ch-EST-M) for determining based on said received predefined reference signal (REF-SIG-1a, REF-SIG-2a, REF-SIG-1b, REF-SIG-2b) a first channel estimation of said transmission channel (BL1, AL1) for said first antenna element (UE1-AE1) and at least one further channel estimation of said transmission channel (BL1, AL1) for said at least one further antenna element (UE1-AE2), and

- means (BS-D-M) for determining said set of beamforming weights for a transmission from said second antenna array (BS2-AS2, UE1-AS) and/or a reception at said second antenna array (BS2-AS2, UE1-AS) based on said first channel estimation and said at least one further channel estimation.

13. A network node (NN) comprising a transmitter apparatus (TRA-APP) according to claim 11 and/or a receiver apparatus (REC-APP) according to claim 12.

14. Network node (NN) according to claim 13, wherein said network node (NN) is adapted to execute simultaneously an initial calibration of said set of beamforming weights for an antenna array (BS1-AS2, BS1-AS) of said network node (NN) by receiving a first predefined reference signal distributed across a first group of radio resource units of a transmission channel (BL1, AL1) between an antenna array (BS2-AS2, UE1-AS) of a further network node and said antenna array (BS1-AS2, BS1-AS) and a transmission from said antenna array (BS1-AS2, BS1-AS) to said antenna array (BS2-AS2, UE2-AS) of said further network node of a second predefined reference signal distributed across at least one second group of radio resource units of said transmission channel (BL1, AL1).

15. Network node (NN) according to claim 13, wherein, when an initial calibration of said set of beamforming weights for an antenna array of said network node (NN) by applying said receiver apparatus (REC-TRA) is finished, said network node (NN) is adapted to operate said transmitter apparatus (TRA-APP) by either transmitting in a non-directional way via one antenna element of said antenna array of said network node (NN) a further predefined reference signal allocated to at least one further group of radio resource units or transmitting in a directional way via at least two or all antenna elements of said antenna array of said network node (NN) said further predefined reference signal by applying said calibrated set of beamforming weights.

**Amended claims in accordance with Rule 137(2) EPC.**

1. A transmitter method (MET-TRA) for supporting a determination of a set of beamforming weights by a receiver method (MET-REC) comprising:

- allocating (TRA-S2) a predefined reference signal (REF-SIG-1a, REF-SIG-2a, REF-SIG-1b, REF-SIG-2b) to at least one group of adjacent radio resource units (RRU-G1a, RRU-G2a, RRU-G1b, RRU-G2b) of a transmission channel (BL1, AL1) between a first antenna array (BS1-AS2, BS1-AS) and a second antenna array (BS2-AS2, UE1-AS), and
- transmitting (TRA-S5) said predefined reference signal (REF-SIG-1a, REF-SIG-2a, REF-SIG-1b, REF-SIG-2b) via said transmission channel (BL1, AL1) from said first antenna array (BS1-AS2, BS1-AS) to said second antenna array (BS2-AS2, UE1-AS).

2. Transmitter method (MET-TRA) according to claim 1, wherein said allocating (TRA-S2) only allocates said predefined reference signal (REF-SIG-1a, REF-SIG-2a, REF-SIG-1b, REF-SIG-2b) to said at least one group of adjacent radio resource units (RRU-G1a, RRU-G2a, RRU-G1b, RRU-G2b) preferably for an initial adjustment of said set of beamforming weights or wherein said allocating (TRA-S2) further allocates data signals to said at least one group of adjacent radio resource units (RRU-G1a, RRU-G2a, RRU-G1b, RRU-G2b) for an overlay of said predefined reference signal (REF-SIG-1a, REF-SIG-2a, REF-SIG-1b, REF-SIG-2b) to said data signals preferably for a fine tuning of said set of beamforming weights.

3. Transmitter method (MET-TRA) according to any of the preceding claims, wherein said allocating (TRA-S2) comprises spreading a reference symbol in frequency or in time or in frequency and time or comprises repeating a predefined bit sequence in time or frequency preferably for a fine tuning of said set of beamforming weights.

4. Transmitter method (MET-TRA) according to any of the preceding claims, wherein said transmitting (TRA-S5) transmits said predefined reference signal (REF-SIG-1a, REF-SIG-2a, REF-SIG-1b, REF-SIG-2b) via a single antenna element of said first antenna array (BS1-AS2, BS1-AS) for said determination of said set of beamforming weights for said second antenna array (BS2-AS2, UE1-AS) or said transmitting (TRA-S5) transmits said predefined reference signal (REF-SIG-1a, REF-SIG-2a, REF-SIG-1b, REF-SIG-2b) with a directional beam pattern by applying a further set of beamforming weights being determined for said first antenna array (BS1-AS2, BS1-AS), or said transmitting (TRA-S5) transmits said predefined reference signal (REF-SIG-1a, REF-SIG-2a, REF-SIG-1b, REF-SIG-2b) distinguishable for a single antenna element (BS1-AE1, BS1-AE2) via all antenna elements (BS1-AE1, BS1-AE2) of said first antenna array (BS1-AS2, BS1-AS).

5. Transmitter method (MET-TRA) according to any of the preceding claims, wherein said transmitter method (MET-TRA) further comprises negotiating (TRA-S1) at least one transmission parameter of said predefined reference signal (REF-SIG-1a, REF-SIG-2a, REF-SIG-1b, REF-SIG-2b) with a network node (BS2, UE1) of said second antenna array (BS2-AS2, UE1-AS) before said transmitting (TRA-S11) of said predefined reference signal (REF-SIG-1a, REF-SIG-2a, REF-SIG-1b, REF-SIG-2b).

6. Transmitter method (MET-TRA) according to claim 5, wherein said transmitting (TRA-S5) transmits said predefined reference signal (REF-SIG-1a, REF-SIG-2a, REF-SIG-1b, REF-SIG-2b) in a first wavelength range preferably a millimeter wavelength range and wherein said negotiating (TRA-S1) comprises transmitting at least one signaling message in a second wavelength range preferably in a centimeter wavelength range.

7. Transmitter method (MET-TRA) according to any of the preceding claims, wherein said transmitting (TRA-S5) transmits said predefined reference signal (REF-SIG-1a, REF-SIG-2a, REF-SIG-1b, REF-SIG-2b) from a transmitter apparatus (TRA-APP) distinguishable to a further predefined reference signal being transmitted by a further transmitter apparatus.

8. A receiver method (MET-REC) for determining a set of beamforming weights comprising:

   - receiving (REC-S4) at a first antenna element (UE1-AE1) of a second antenna array (BS2-AS2, UE1-AS) and at at least one further antenna element (UE1-AE2) of said second antenna array (BS2-AS2, UE1-AS) via a transmission channel (BL1, AL1) from a first antenna array (BS1-AS2, BS1-AS) a predefined reference signal (REF-SIG-1a, REF-SIG-2a, REF-SIG-1b, REF-SIG-2b) allocated to at least one group of adjacent radio resource units (RRU-G1a, RRU-G2a, RRU-G1b, RRU-G2b) of said transmission channel (BL1, AL1),
   - determining (REC-S6) based on said received predefined reference signal (REF-SIG-1a, REF-SIG-2a, REF-SIG-1b, REF-SIG-2b) a first channel estimation of said transmission channel (BL1, AL1) for said first antenna element (UE1-AE1) and at least one further channel estimation of said transmission channel (BL1, AL1) for said at least one further antenna element (UE1-AE2), and
   - determining (REC-S7) said set of beamforming weights for a transmission from said second antenna array (BS2-AS2, UE1-AS) and/or a reception at said second antenna array (BS2-AS2, UE1-AS) based on said first channel estimation and said at least one further channel estimation.

9. Receiver method (MET-REC) according to preceding claim 8, wherein said receiver method (MET-REC) further comprises spectrally filtering (REC-S5) a received signal comprising said predefined reference signal (REF-SIG-1a, REF-SIG-2a, REF-SIG-1b, REF-SIG-2b) for extracting said predefined reference signal (REF-SIG-1a, REF-SIG-2a, REF-SIG-1b, REF-SIG-2b) from said received signal, when said at least one group of adjacent radio resource units (RRU-G1a, RRU-G2a, RRU-G1b, RRU-G2b) not fully covers a frequency band of said transmission channel (BL1, AL1).

10. Receiver method (MET-REC) according to claim 8 or claim 9, wherein said receiving (REC-S4) receives and evaluates said predefined reference signal (REF-SIG-1a, REF-SIG-2a, REF-SIG-1b, REF-SIG-2b) at all antenna elements (UE1-AE1, UE1-AE2) of said second antenna array (BS2-AS2, UE1-AS) or at all sub-groups (AE-SG1) of antenna elements of said second antenna array (UE1-AS), when said first antenna array (BS1-AS2, BS1-AS) transmit said predefined reference signal (REF-SIG-1a, REF-SIG-2a, REF-SIG-1b, REF-SIG-2b) by a single antenna element (BS1-AE1, BS1-AE2).

11. A transmitter apparatus (TRA-APP) for supporting a determination of a set of beamforming weights by a receiver apparatus (REC-APP) comprising:

   - means (RRAM) for allocating a predefined reference signal (REF-SIG-1a, REF-SIG-2a, REF-SIG-1b, REF-SIG-2b) to at least one group of adjacent radio resource units (RRU-G1a, RRU-G2a, RRU-G1b, RRU-G2b) of a transmission channel (BL1, AL1) between a first antenna array (BS1-AS2, BS1-AS) and a second antenna array (BS2-AS2, UE1-AS), and
   - means (TRA-AN-M) for transmitting said predefined reference signal (REF-SIG-1a, REF-SIG-2a, REF-SIG-1b, REF-SIG-2b) via said transmission channel (BL1, AL1) from said first antenna array (BS1-AS2, BS1-AS) to said second antenna array (BS2-AS2, UE1-AS).

12. A receiver apparatus (REC-APP) for determining a set of beamforming weights comprising:

   - means (REC-AM-M) for receiving at a first antenna element (UE1-AE1) of a second antenna array (BS2-AS2, UE1-AS) and at at least one further antenna element (UE1-AE2) of said second antenna array (BS2-AS2, UE1-AS) via a transmission channel (BL1, AL1) from a first antenna array (BS1-AS2, BS1-AS) a predefined reference signal (REF-SIG-1a, REF-SIG-2a, REF-SIG-1b, REF-SIG-2b) allocated to at least one group of adjacent radio resource units (RRU-G1a, RRU-G2a, RRU-G1b, RRU-G2b) of said transmission channel (BL1, AL1),
   - means (Ch-EST-M) for determining based on said received predefined reference signal (REF-SIG-1a, REF-SIG-2a, REF-SIG-1b, REF-SIG-2b) a first channel estimation of said transmission channel (BL1, AL1) for said first antenna element (UE1-AE1) and at least one further channel estimation of said transmission channel (BL1, AL1) for said at least one further antenna element (UE1-AE2), and
   - means (BS-D-M) for determining said set of beamforming weights for a transmission from said second antenna array (BS2-AS2, UE1-AS) and/or a reception at said second antenna array (BS2-AS2, UE1-AS) based on said first channel estimation and said at least one further channel estimation.

13. A network node (NN) comprising a transmitter apparatus (TRA-APP) according to claim 11 and/or a receiver apparatus (REC-APP) according to claim 12.

14. Network node (NN) according to claim 13, wherein said network node (NN) is adapted to execute simultaneously an initial calibration of said set of beamforming weights for an antenna array (BS1-AS2, BS1-AS) of said network node (NN) by receiving a first predefined reference signal distributed across a first group of adjacent radio resource units of a transmission channel (BL1, AL1) between an antenna array (BS2-AS2, UE1-AS) of a further network node and said antenna array (BS1-AS2, BS1-AS) and a transmission from said antenna array (BS1-AS2, BS1-AS) to said antenna array (BS2-AS2, UE2-AS) of said further network node of a second predefined reference signal distributed across at least one second group of adjacent radio resource units of said transmission channel (BL1, AL1).

15. Network node (NN) according to claim 13, wherein, when an initial calibration of said set of beamforming weights for an antenna array of said network node (NN) by applying said receiver apparatus (REC-TRA) is finished, said network node (NN) is adapted to operate said transmitter apparatus (TRA-APP) by either transmitting in a non-directional way via one antenna element of said antenna array of said network node (NN) a further predefined reference signal allocated to at least one further group of adjacent radio resource units or transmitting in a directional way via at least two or all antenna elements of said antenna array of said network node (NN) said further predefined reference signal by applying said calibrated set of beamforming weights.

*FIG. 1*

HET-RAN

BS3-AS2

C1

BL2

BS3-AS1

BS1-AS2

C3

BS3

BS1-AS1

BL1

BS1-2

BS2-AS2

BS2-AS1

C2

BS2

## FIG. 2

FIG. 3

FIG. 4

FIG. 5

FIG. 6

FIG. 7

FIG. 8

FIG. 9

NN

TRANC-APP

REC-APP

TRA-APP

FIG. 10

| | Europäisches Patentamt European Patent Office Office européen des brevets | **EUROPEAN SEARCH REPORT** | Application Number EP 13 30 6509 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 472 381 B1 (LEE JUNGWON [US] ET AL) 25 June 2013 (2013-06-25) | 1,4,5,7, 8,10-15 | INV. H04B7/06 |
| Y | * column 1, lines 48-60 *<br>* column 3, lines 9-34; figure 1 *<br>* column 5, lines 40-51; figure 2 *<br>* column 8, lines 18-35 *<br>----- | 2,3,6,9 | H04B7/04 H04L5/00 |
| Y | PHILIPS: "Super-imposed 2nd reference symbols for E-UTRA downlink", 3GPP DRAFT; R1-060223, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Helsinki, Finland; 20060123, 18 January 2006 (2006-01-18), XP050417387, [retrieved on 2006-01-18] * page 1 - page 3 *<br>----- | 2,3,9 | |
| Y | US 2011/182174 A1 (PI ZHOUYUE [US] ET AL) 28 July 2011 (2011-07-28) * paragraphs [0054] - [0055] *<br>----- | 6 | **TECHNICAL FIELDS SEARCHED (IPC)** H04W H04B H04L |

The present search report has been drawn up for all claims

| Place of search | Date of completion of the search | Examiner |
|---|---|---|
| Munich | 18 March 2014 | Sälzer, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 6509

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2014

| Patent document cited in search report | | Publication date | Patent family member(s) | Publication date |
|---|---|---|---|---|
| US 8472381 | B1 | 25-06-2013 | NONE | |
| US 2011182174 | A1 | 28-07-2011 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. S. JEON ; Y. WANG ; Y. QIAN ; T. ITOH.** A novel planar array smart antenna system with hybrid analogue-digital beamforming. *IEEE MTT-S Int. Microwave Symp. Dig.,* May 2001, vol. 1, 121-124